(19) Europäisches Patentamt
European Patent Office
Office européen des brevets

(11) **EP 2 318 224 B1**

(12) **EUROPÄISCHE PATENTSCHRIFT**

(45) Veröffentlichungstag und Bekanntmachung des Hinweises auf die Patenterteilung:
**29.05.2013 Patentblatt 2013/22**

(21) Anmeldenummer: **09780353.0**

(22) Anmeldetag: **09.07.2009**

(51) Int Cl.:
*B60G 17/016* (2006.01)    *B60G 17/0195* (2006.01)
*B60W 30/04* (2006.01)    *B60R 16/023* (2006.01)

(86) Internationale Anmeldenummer:
**PCT/EP2009/058719**

(87) Internationale Veröffentlichungsnummer:
**WO 2010/023019 (04.03.2010 Gazette 2010/09)**

(54) **VERFAHREN UND VORRICHTUNG ZUR VERHINDERUNG DES SEITLICHEN UMKIPPENS VON KRAFTFAHRZEUGEN**

METHOD AND DEVICE FOR PREVENTING THE LATERAL OVERTURNING OF MOTOR VEHICLES

PROCÉDÉ ET DISPOSITIF DESTINÉS À PRÉVENIR LE BASCULEMENT LATÉRAL DE VÉHICULES AUTOMOBILES

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **27.08.2008 DE 102008041586**

(43) Veröffentlichungstag der Anmeldung:
**11.05.2011 Patentblatt 2011/19**

(73) Patentinhaber: **Robert Bosch GmbH 70442 Stuttgart (DE)**

(72) Erfinder:
• **GOETTSCH, Gerhard Heilbronn 74081 (DE)**
• **MERLEIN, Dominik Roettenbach 91187 (DE)**

(56) Entgegenhaltungen:
**EP-A- 1 314 631       WO-A-98/47733
DE-A1- 10 356 827    US-A- 3 908 782
US-A- 6 130 608       US-A1- 2006 076 741
US-B1- 6 438 463**

**Beschreibung**

Stand der Technik

Aus der WO 98/47733 ist ein Fahrzeug bekannt, welches einen Rahmen umfasst, welcher sich in Longitudinalrichtung des Fahrzeugs erstreckt, sowie Mittel zur Reduktion der Fahrzeuggeschwindigkeit. Eine Detektionsvorrichtung misst einen Neigungswinkel des Rahmens senkrecht zur Vertikalrichtung. Ein Steuergerät aktiviert die Mittel zur Reduktion der Fahrzeuggeschwindigkeit abhängig vom Neigungswinkel.

Aus der US 2006/0076741 A1 ist ein Fahrzeugstabilisierungssystem bekannt, welches eine sichere Kurvenfahrt mit hoher Geschwindigkeit, hohem Bremskraftpotential und hoher Überrollsicherheit erlaubt. Dazu wird bei einer Kurvenfahrt der Schwerpunkt des Fahrzeugs in eine stabilere Position verschoben.

Aus der DE 103 56 827 A1 ist ein Verfahren zur Kippstabilisierung eines Fahrzeugs in einer fahrdynamisch kippkritischen Situation bekannt. Wobei eine kippkritische Situation durch Auswertung einer Steuergröße erkannt und der Stabilisierungseingriff in Abhängigkeit von der Steuergröße aktiviert oder deaktiviert wird. Der Regeleingriff kann auch in Fahrsituationen mit relativ geringer Querbeschleunigung aufrechterhalten werden, wenn die Steuergröße oder eine charakteristische Eigenschaft des Stabilisierungsalgorithmus als Funktion des Lenkwinkels und der Fahrzeuggeschwindigkeit berechnet wird. Die Merkmale der Oberbegriffe der unabhängigen Ansprüche sind der DE 103 56 827 A1 entnommen.

Offenbarung der Erfindung

Die Erfindung betrifft ein Verfahren zur Verhinderung des seitlichen Umkippens von Kraftfahrzeugen, bei dem

- eine die seitliche Querdynamik des Kraftfahrzeugs repräsentierende Quergröße ermittelt wird und
- die Quergröße mit wenigstens einem Schwellenwert verglichen wird und
- abhängig vom Vergleich ein Bremseingriff zur Verhinderung des seitlichen Umkippens durchgeführt wird.

Der Kern der Erfindung ist dadurch gekennzeichnet, dass

- eine die seitliche Schrägstellung des Fahrzeugaufbaus repräsentierende Schrägstellungsgröße ermittelt wird und
- der Schwellenwert abhängig von der Schrägstellungsgröße ist.

Damit ist es möglich, auch bei unsymmetrisch beladenen Fahrzeugen eine zuverlässige Umkippverhinderung ohne eine zu frühzeitige Durchführung der Regelungseingriffe durchzuführen. Bei der Quergröße kann es sich um eine die momentane Querdynamik repräsentierende Größe wie z.B. die Querbeschleunigung handeln. Es kann sich jedoch auch um eine künftig zu erwartende, die Querdynamik repräsentierende Größe handeln, welche sich beispielsweise mittels einer Extrapolation oder Prädiktion ergibt. Dadurch kann der Stabilisierungseingriff frühzeitiger erfolgen oder auch unterbleiben, falls fahrerseitig bereits geeignete Stabilisierungsmaßnahmen (z.B. über den Lenkwinkel) getroffen werden.

Erfindungsgemäß ist vorgesehen, dass die Schrägstellungsgröße mittels des Offsetwertes eines Querbeschleunigungssensors ermittelt wird. Dadurch ist eine einfache Möglichkeit zur Ermittlung der Schrägstellungsgröße gegeben.
Weiter ist erfindungsgemäß vorgesehen, dass die Schrägstellungsgröße zumindest abhängig davon ist, ob der Fahrzeugaufbau nach links oder rechts geneigt ist.

Eine vorteilhafte Ausgestaltung der Erfindung ist dadurch gekennzeichnet, dass der Offsetwert des Querbeschleunigungssensors mittels einer Langzeitfilterung des Ausgangssignals des Querbeschleunigungssensors ermittelt wird. Eine Schrägstellung des Querbeschleunigungssensors erfolgt nicht nur durch eine Fahrzeugneigung infolge unsymmetrischer Beladung, sondern selbstverständlich auch durch den toleranzbehafteten Einbau in das Kraftfahrzeug. Die Schrägstellung infolge des toleranzbehafteten Einbaus ist jedoch deutlich geringer als die Schrägstellung infolge unsymmetrischer Fahrzeugbeladung. Durch die Langzeitfilterung werden zudem Schrägstellungen der Sensors infolge einer Straßenseitenneigung ausgemittelt.

Eine vorteilhafte Ausgestaltung der Erfindung ist dadurch gekennzeichnet,

- dass für den Fall, dass das Fahrzeug eine Linkskurve fährt und der Fahrzeugaufbau nach links geneigt ist oder dass das Fahrzeug eine Rechtskurve fährt und der Fahrzeugaufbau nach rechts geneigt ist, der Schwellenwert erhöht wird, insbesondere abhängig vom Offsetwert erhöht wird und insbesondere um den Offsetwert erhöht wird, und
- dass für den Fall, dass das Fahrzeug eine Linkskurve fährt und der Fahrzeugaufbau nach rechts geneigt ist oder dass das Fahrzeug eine Rechtskurve fährt und der Fahrzeugaufbau nach links geneigt ist, der Schwellenwert erniedrigt wird, insbesondere abhängig vom Offsetwert erniedrigt wird und insbesondere um den Offsetwert erniedrigt wird.

Dadurch wird berücksichtigt, dass im erstgenannten Fall das Fahrzeug weniger kippgefährdet ist gegenüber dem symmetrisch beladenen Fahrzeug und dass im zweitgenannten Fall das Fahrzeug stärker kippgefährdet ist gegenüber dem symmetrisch beladenen Fahrzeug.

Eine vorteilhafte Ausgestaltung der Erfindung ist dadurch gekennzeichnet, dass der Schwellenwert um den Offsetwert erhöht wird bzw. dass der Schwellenwert um den Offsetwert erniedrigt wird.

Eine vorteilhafte Ausgestaltung ist dadurch gekennzeichnet, dass durch den Bremseingriff nur das kurvenäußere Vorderrad gebremst wird.

Eine vorteilhafte Ausgestaltung ist dadurch gekennzeichnet, dass durch den Bremseingriff alle kurvenäußeren Räder gebremst werden.

Eine vorteilhafte Ausgestaltung ist dadurch gekennzeichnet, dass durch den Bremseingriff beide Vorderräder gebremst werden.

Die vorstehend genannten Bremsmaßnahmen haben sich als fahrstabilitätserhöhend bei Umkippgefahr erwiesen.

Weiter betrifft die Erfindung eine Vorrichtung, enthaltend Mittel, die zur Durchführung der vorstehend genannten Verfahren ausgestaltet sind.

Die vorteilhaften Ausgestaltungen des erfindungsgemäßen Verfahrens äußern sich auch als vorteilhafte Ausgestaltungen der erfindungsgemäßen Vorrichtung und umgekehrt.

Kippkritische Fahrzeuge zeigen häufig eine Asymmetrie des Fahrzeug- bzw. Beladungsschwerpunkts zur Fahrzeuglängsachse. Die Asymmetrie kann z.B. aufgrund der Einbauorte von Fahrzeugeinrichtungen wie z.B. Kraftstofftank oder Batterien hervorgerufen sein, Häufig entsteht die Asymmetrie jedoch auch durch die asymmetrische Anbringung einer Nutzlast infolge räumliche Gegebenheiten des Laderaums oder der Befestigungsmöglichkeiten am oder im Fahrzeug. Ein Beispiel dafür sind Fahrzeuge für Glaser mit am Fahrzeug seitlich angebrachten Scheibenhaltern. Durch die unsymmetrische Beladungsverteilung stellt sich eine Seitenneigung des Fahrzeugaufbaus infolge unterschiedlicher Federbelastung oder Dämpferbelastung an der linken und rechten Fahrzeugseite ein.

Bei Regelsystemen basierend auf symmetrischer Lastverteilung besteht ein Zielkonflikt zwischen Stabilität und unplausiblem Anregeln. Möchte man den Regler so empfindlich einstellen, dass auch ein Kippen in die infolge der asymmetrischen Beladung kippkritischere Richtung sicher vermieden wird, so empfindet der Fahrer die daraus resultierenden Eingriffe in die unkritischere Richtung als zu früh und störend, evtl. sogar als Fehlanregelungen.

Um diese Mängel zu beseitigen, ist es sinnvoll, eine Beladungsasymmetrie auch im Regler darzustellen. Dazu ist allerdings eine ausreichend genaue Information über den Ist-Zustand des Fahrzeugs erforderlich. Eine feste Asymmetrie im Regler vorzusehen ist nicht zielführend, da keine Informationen über den tatsächlichen Fahrzeugaufbau, spätere Fahrzeugein- und -umbauten sowie Beladung vorliegen

Die aus eventuellen Einbauorttoleranzen hervorgerufene Schrägstellung des Querbeschleunigungssensors bewirkt, dass neben der eigentlichen Querbeschleunigung auch ein Anteil der Erdbeschleunigung mitgemessen wird. Mit einem Langzeitabgleich kann dieser Anteil, welcher sich als Offsetwert des Querbeschleunigungssignals äußert, über eine gewisse Fahrstrecke ermittelt und über einen Offsetabgleich kompensiert werden.

Bei beladungsasymmetrischen Fahrzeugen enthält man durch die beladungsbedingte Querneigung des Fahrzeugaufbaus eine zusätzliche Schrägstellung des Querbeschleunigungssensors, welche deutlich größer als die durch die Einbautoleranz hervorgerufene Schrägstellung ist. Dieser durch die Schrägstellung hervorgerufene Querbeschleunigungsoffsetwert ayoff wird direkt im Regler als additiver Anteil zur Berechnung von querbeschleunigungsabhängigen Auslöseschwellen verwendet. Dadurch wird eine asymmetrische Kipptendenz im Regler berücksichtigt und zu jeder Zeit ein passender Eingriffszeitpunkt sowie eine passende Eingriffsstärke bei Kurvenfahrten in beide Richtungen sichergestellt.

Die Zeichnung umfasst die Figuren 1 bis 3. Es zeigen

- Fig. 1 eine schematische Blockdarstellung eines Kippstabilisierungssystems,
- Fig. 2 eine schematische Darstellung der Bildung einer Steuergröße ayeff eines Kippstabilisierungs-Algorithmus und
- Fig. 3 den grundlegenden Ablauf des erfindungsgemäßen Verfahrens.

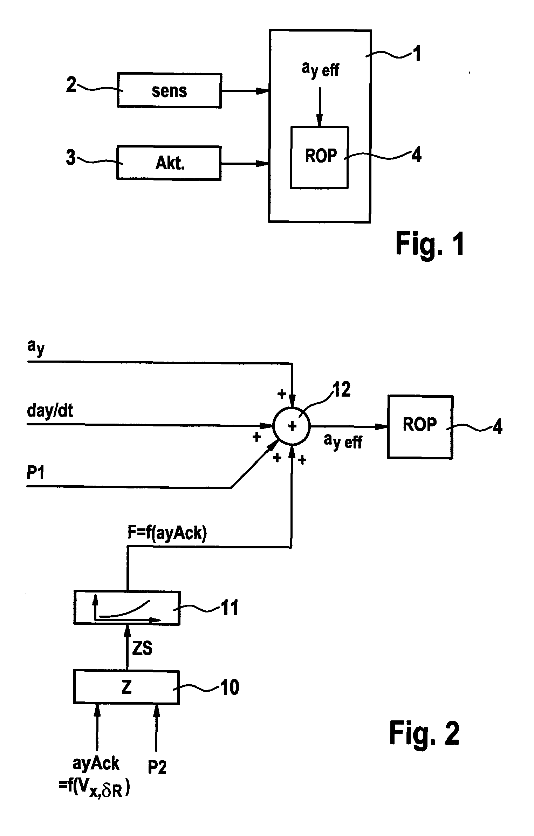

Fig. 1 zeigt eine schematische Darstellung eines Kippstabilisierungssystems mit einem Steuergerät 1, in dem ein Kippstabilisierungsalgorithmus 4 hinterlegt ist, einer Sensorik 2 zum Erkennen eines kritischen Fahrzustandes und einem Aktuator 3 zum Durchführen eines Stabilisierungseingriffes. Die Sensorik 2 umfasst die üblichen Sensoren eines Fahrdynamikregelungssystems (ESP), wie z.B. Raddrehzahlsensoren, einen Querbeschleunigungssensor, ein Gierratensensor, einen Bremsdrucksensor, einen Lenkradwinkelsensor, etc. und ist aus Gründen der Vereinfachung als ein Block 2 dargestellt. Als Aktuator kann z.B. eine Bremsanlage des Fahrzeugs, ein fahrerunabhängiges Lenksystem oder z.B. auch ein aktives Feder/Dämpfer-System eingesetzt werden.

In einer kippkritischen Fahrsituation berechnet ein Kippstabilisierungsalgorithmus einen Stelleingriff, mit dem die Querbeschleunigung des Fahrzeugs reduziert und somit das Fahrzeug am Umkippen gehindert wird. Der Stelleingriff erfolgt beispielsweise durch Betätigen der Radbremse am kurvenäußeren Vorderrad. Dadurch wird ein Giermoment erzeugt, das der Gierbewegung des Fahrzeugs entgegenwirkt und somit das Fahrzeug stabilisiert. Nach Erfüllen einer vorgegebenen Stabilitätsbedingung kann der Regeleingriff wieder deaktiviert werden. Die Aktivierung bzw. Deaktivierung des Stabilisierungseingriffs kann beispielsweise in Abhängigkeit von einer Steuergröße ayeff erfolgen, ayeff ist dabei wiederum abhängig von der Querbeschleunigung aq. Die Steuergröße ayeff wird dabei bzgl. des Überschreitens eines Schwellenwertes überwacht. Überschreitet ayeff eine vorgegebene Einschaltschwelle, dann wird ein Stabilisierungseingriff durchgeführt. Unterschreitet ayeff danach eine vorgegebene Ausschaltschwelle, dann wird der Stabilisierungseingriff beendet.

Die Berechnung der Steuergröße ayeff ergibt ist in einem Ausführungsbeispiel in Fig. 2 dargestellt. Fig. 2 zeigt eine schematische Darstellung der verschiedenen Größen, die in die Berechnung der Steuergröße ayeff einfließen. Die verschiedenen Größen werden in diesem Beispiel summiert (Summierknoten 12) und daraus die Steuergröße ayeff gebildet.

Die Steuergröße ist im vorliegenden Fall abhängig von der Querbeschleunigung ay des Fahrzeugs, von der zeitlichen Änderung der Querbeschleunigung day/dt sowie von einem oder mehreren fahrzeugspezifischen Parametern P, wie z.B. dem Eigenlenkgradienten oder dem Lenkwinkelgradienten.

Die Steuergröße ayeff ist darüber hinaus eine Funktion einer weiteren Größeehier als Größe F bezeichnet -, die wiederum eine Funktion des Lenkwinkels $\delta_R$ und der Fahrzeuglängsgeschwindigkeit $V_x$ ist. Die Größe F kann beispielsweise durch ein geeignetes Fahrdynamikmodell berechnet werden. Hierzu bietet sich insbesondere das aus der Literatur bekannte "Einspurmodell" an, aus dem die sogenannte "Ackermann-Gleichung" hergeleitet wird. Mit dem Einspurmodell wird eine Soll-Giergeschwindigkeit $d_{\psi so}$/dt berechnet, wobei gilt:

$$d\psi_{So}/dt = \frac{\delta_R}{l} \times \frac{v_x}{1 + (v_x / v_{ch})^2}$$

Dabei ist $\delta_R$ der Lenkwinkel an der Vorderachse, l der Radstand, $v_x$ die Fahrzeuglängsgeschwindigkeit und $v_{ch}$ eine charakteristische Geschwindigkeit.

Aus dem Einspurmodell kann auch eine Querbeschleunigung ayAck berechnet werden, wobei gilt:

$$ayAck = d\psi_{So}/dt * v_x.$$

Die Größe ayAck drückt diejenige Querbeschleunigung aus, die sich aufgrund des Fahrerwunsches, nämlich des Lenkwinkels $\delta_R$, der Fahrzeuggeschwindigkeit und den Fahrzeugparametern bei stationärer Kreisfahrt, unter der Voraussetzung der Gültigkeit des linearen Einspurmodells, ergeben würde.

Die Größe ayAck könnte - gegebenenfalls normiert und auf einen vorgegebenen Wertebereich begrenzt - z.B. unmittelbar in die Berechnung der Steuergröße ayeff einfließen und z.B. am Knoten 12 zu den übrigen Größen hinzuaddiert werden. Vorteilhafter ist es jedoch, die virtuelle Querbeschleunigung ayAck einer Puffer- bzw. Speicherschaltung 10,11 zuzuführen, die insbesondere bei hochdynamischen Lenkmanövern (z.B. Spurwechselmanöver), in denen auch neutrale Phasen mit geringer Querbeschleunigung und neutraler Lenkradstellung und damit kleinen Werten ayAck vorkommen, die vorherigen hohen Werte von ayAck nicht sofort "vergißt". Ohne diese Speicherschaltung 10,11 würde der Stabilisierungseingriff bei kleinen Werten von ayAck sofort abgebrochen werden, was bei hochdynamischen Manövern nicht sinnvoll ist.

Die Puffer- bzw. Speichereinrichtung umfasst im dargestellten Ausführungsbeispiel einen in Software realisierten Zähler 10, dem die virtuelle Querbeschleunigung ayAck sowie ein weiterer fahrzeugspezifischer Parameter P2 zugeführt werden. Der Parameter ist z.B. ein Eigenlenkgradient P2. Überschreiten die beiden Eingangsgrößen ayAck,P2 vorgegebene Schwellenwerte, wird der Zähler 10 auf einen vorgegebenen Zählerstand ZS gesetzt. In einer Fahrphase, in der die Größe ayAck oder der Parameter P eine vorgegebene Ausschaltschwelle unterschreiten, startet der Zähler und zählt rückwärts. Der Zählerstand ZS wird mittels einer Kennlinie 11 gewichtet und neu dimensioniert. Der resultierende Wert F fließt in die Berechnung der Steuergröße ayeff mit ein und wird am Knoten 12 zu den übrigen Größen ay, day/dt, P addiert. Die Kennlinie 11 ist vorzugsweise eine nichtlineare Kennlinie.

Wird die Einschaltschwelle aufgrund des Lenkverhaltens des Fahrers erneut überschritten, wird der Zähler 10 wieder gesetzt. Der Wert der Steuergröße ayeff ändert sich in diesem Fall nur geringfügig und die Stabilisierungsregelung 4 bleibt beibehalten. Sofern die Einschaltschwelle nicht mehr überschritten wird, zählt der Zähler 10 weiter zurück, wobei sich die Größe F entsprechend dem Zählerstand (gewichtet mit der Kennlinie 11) reduziert. Wenn der Wert F und damit die Steuergröße ayeff einen vorgegebenen Schwellenwert unterschreitet, wird die Stabilisierungsregelung 4 abgebrochen.

Mit der beschriebenen Puffereinrichtung 10,11 ist es daher möglich, den Stabilisierungseingriff auch während kurzfristiger neutraler Fahrzustände in hochdynamischen Manövern beizubehalten.

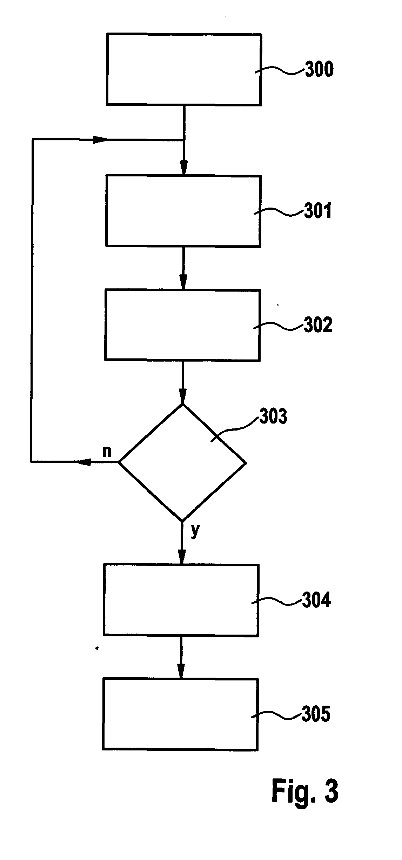

Der grundlegende Ablauf des erfindungsgemäßen Verfahrens ist in Fig. 3 dargestellt. Nach dem Start des Verfahrens in Block 300 wird in Block 301 eine die seitliche Querdynamik des Kraftfahrzeugs repräsentierende Quergröße ermittelt und anschließend daran in Block 302 eine die seitliche Schrägstellung des Fahrzeugs repräsentierende Schrägstellungsgröße ermittelt. Danach wird in Block 303 überprüft, ob die Quergröße einen Schwellenwert überschreitet, wobei der Schwellenwert von der Schrägstellungsgröße anhängig ist. Lautet die Antwort "nein" (in Fig. 3 als "n" gekennzeichnet), dann wird zum Eingang des Blockes 301 zurückgegangen. Lautet die Antwort dagegen "ja" (in Fig. 3 als "y" gekennzeichnet), dann wird anschließend in Block 304 ein Bremseingriff zur Verhinderung des Umkippens des Kraftfahrzeugs durchgeführt. In Block 305 endet das Verfahren.

**Patentansprüche**

1. Verfahren zur Verhinderung des seitlichen Umkippens von Kraftfahrzeugen, bei dem

   - eine die seitliche Querdynamik des Kraftfahrzeugs repräsentierende Quergröße (ayeff) ermittelt wird (301) und
   - die Quergröße (ayeff) mit wenigstens einem Schwellenwert verglichen wird (303) und
   - abhängig vom Vergleich ein Bremseingriff zur Verhinderung des seitlichen Umkippens durchgeführt wird (304),
   **dadurch gekennzeichnet, dass**
   - eine die seitliche Schrägstellung des Fahrzeugaufbaus repräsentierende Schrägstellungsgröße ermittelt wird (302) und
   - der Schwellenwert abhängig von der Schrägstellungsgröße ist,
   - wobei die Schrägstellungsgröße mittels des Offsetwertes eines Querbeschleunigungssensors (2) ermittelt wird (302) und
   - die Schrägstellungsgröße zumindest abhängig davon ist, ob der Fahrzeugaufbau nach links oder rechts geneigt ist.

2. Verfahren nach Anspruch 1, **dadurch gekennzeichnet, dass** der Offsetwert des Querbeschleunigungssensors (2) mittels einer Langzeitfilterung des Ausgangssignals (ay) des Querbeschleunigungssensors (2) ermittelt wird.

3. Verfahren nach Anspruch 1, **dadurch gekennzeichnet,**

   - **dass** für den Fall, dass das Fahrzeug eine Linkskurve fährt und der Fahrzeugaufbau nach links geneigt ist oder dass das Fahrzeug eine Rechtskurve fährt und der Fahrzeugaufbau nach rechts geneigt ist, der Schweilenwert erhöht wird und
   - **dass** für den Fall, dass das Fahrzeug eine Linkskurve fährt und der Fahrzeugaufbau nach rechts geneigt ist oder dass das Fahrzeug eine Rechtskurve fährt und der Fahrzeugaufbau nach links geneigt ist, der Schwellenwert erniedrigt wird.

4. Verfahren nach Anspruch 1, **dadurch gekennzeichnet, dass** der Schwellenwert um den Offsetwert erhöht wird bzw. dass der Schwellenwert um den Offsetwert erniedrigt wird.

5. Verfahren nach Anspruch 1, **dadurch gekennzeichnet, dass** durch den Bremseingriff (304) nur das kurvenäußere Vorderrad gebremst wird.

6. Verfahren nach Anspruch 1, **dadurch gekenn-** zeichnet, dass durch den Bremseingriff (304) nur alle kurvenäußeren Räder gebremst werden.

7. Verfahren nach Anspruch 1, **dadurch gekennzeichnet, dass** durch den Bremseingriff (304) nur beide Vorderräder gebremst werden.

8. Vorrichtung zur Verhinderung des seitlichen Umkippens von Kraftfahrzeugen, enthaltend

   - Mittel zur Ermittlung einer die seitliche Querdynamik des Kraftfahrzeugs repräsentierende Quergröße (ayeff),
   - Mittel zum Vergleich der Quergröße (ayeff) mit wenigstens einem Schwellenwert und
   - Mittel zur Durchführung eines Bremseingriffs zur Verhinderung des seitlichen Umkippens abhängig vom Vergleich,
   **gekennzeichnet durch** Mittel
   - die eine die seitliche Schrägstellung des Fahrzeugaufbaus repräsentierende Schrägstellungsgröße ermitteln,
   - wobei der Schwellenwert abhängig von der Schrägstellungsgröße ist,
   - wobei die Schrägstellungsgröße mittels des Offsetwertes eines Querbeschleunigungssensors (2) ermittelt wird (302) und
   - die Schrägstellungsgröße zumindest abhängig davon ist, ob der Fahrzeugaufbau nach links oder rechts geneigt ist.

**Claims**

1. Method for preventing the lateral overturning of motor vehicles, in which

   - a lateral variable (ayeff) which represents the lateral dynamics of the motor vehicle is determined, (301) and
   - the lateral variable (ayeff) is compared with at least one threshold value, (303), and
   - a braking intervention for preventing the lateral overturning is carried out as a function of the comparison, (304),
   **characterized in that**
   - an oblique position variable which represents the lateral oblique position of the vehicle body is determined, (302), and
   - the threshold value is dependent on the oblique position variable,
   - wherein the oblique position variable is determined by means of the offset value of a lateral acceleration sensor (2), (302), and
   - the oblique position variable is at least dependent on whether the vehicle body is inclined to the left or to the right.

**2.** Method according to Claim 1, **characterized in that** the offset value of the lateral acceleration sensor (2) is determined by means of long term filtering of the output signal (ay) of the lateral acceleration sensor (2).

**3.** Method according to Claim 1, **characterized**

- **in that** the threshold value is increased in the event of the vehicle driving through a left-hand bend and the vehicle body being inclined to the left or in the event of the vehicle driving through a right-hand bend and the vehicle body being inclined to the right, and
- **in that** the threshold value is decreased in the event of the vehicle driving through a left-hand bend and the vehicle body being inclined to the right or in the event of the vehicle driving through a right-hand bend and the vehicle body being inclined to the left.

**4.** Method according to Claim 1, **characterized in that** the threshold value is increased by the offset value and/or **in that** the threshold value is decreased by the offset value.

**5.** Method according to Claim 1, **characterized in that** only the front wheel which is on the outside of the bend is braked by the braking intervention (304).

**6.** Method according to Claim 1, **characterized in that** only all the wheels on the outside of the bend are braked by the braking intervention (304).

**7.** Method according to Claim 1, **characterized in that** only the two front wheels are braked by the braking intervention (304).

**8.** Device for preventing the lateral overturning of motor vehicles, containing

- means for determining a lateral variable (ayeff) which represents the lateral dynamics of the motor vehicle,
- means for comparing the lateral variable (ayeff) with at least one threshold value, and
- means for carrying out a braking intervention for preventing the lateral overturning as a function of the comparison,
**characterized by** means
- which determine an oblique position variable which represents the lateral oblique position of the vehicle body,
- wherein the threshold value is dependent on the oblique position variable,
- wherein the oblique position variable is determined by means of the offset value of a lateral acceleration sensor (2), (302), and

- the oblique position variable is at least dependent on whether the vehicle body is inclined to the left or the right.

## Revendications

**1.** Procédé destiné à empêcher le basculement latéral des véhicules automobiles, dans lequel :

une grandeur transversale (ayeff) représentant la dynamique transversale latérale du véhicule automobile est déterminée (301) ; et la grandeur transversale (ayeff) est comparée (303) à au moins une valeur seuil ; et une intervention sur le frein destinée à empêcher le basculement latéral est réalisée (304) en fonction du résultat de la comparaison ; **caractérisé en ce que** :

une grandeur de position oblique représentant la position oblique latérale de la structure du véhicule est déterminée (302) ; et la valeur seuil dépend de la grandeur de position oblique ; la grandeur de position oblique étant déterminée (302) à l'aide de la valeur de décalage d'un capteur d'accélération transversale (2) ; la grandeur de position oblique dépend de si la structure du véhicule est adaptée à gauche ou à droite.

**2.** Procédé selon la revendication 1, **caractérisé en ce que** la valeur de décalage du capteur d'accélération transversale (2) est déterminée à l'aide d'un filtrage de longue durée du signal de sortie (ay) du capteur d'accélération transversale (2).

**3.** Procédé selon la revendication 1, **caractérisé en ce que** :

dans le cas dans lequel le véhicule se trouve dans un virage à gauche et que la structure du véhicule est adaptée à gauche ou dans le cas dans lequel le véhicule se trouve dans un virage à droite et que la structure du véhicule est adaptée à droite, la valeur seuil est augmentée ; dans le cas dans lequel le véhicule se trouve dans un virage à gauche et que la structure du véhicule est adaptée à droite ou dans le cas dans lequel le véhicule se trouve dans un virage à droite et que la structure du véhicule est adaptée à gauche, la valeur seuil est réduite.

**4.** Procédé selon la revendication 1, **caractérisé en ce que** la valeur seuil est augmentée de la valeur de décalage ou que la valeur seuil est réduite de la valeur de décalage.

5. Procédé selon la revendication 1, **caractérisé en ce que** l'intervention sur le frein (304) ne fait freiner que la roue avant placée à l'extérieur du virage.

6. Procédé selon la revendication 1, **caractérisé en ce que** l'intervention sur le frein (304) ne fait freiner que l'ensemble des roues placées à l'extérieur du virage.

7. Procédé selon la revendication 1, **caractérisé en ce que** l'intervention sur le frein (304) ne fait freiner que les deux roues avant.

8. Dispositif destiné à empêcher le basculement latéral des véhicules automobiles, contenant :

> des moyens de détermination d'une grandeur transversale (ayeff) représentant la dynamique transversale latérale du véhicule automobile ;
> des moyens de comparaison de la grandeur transversale (ayeff) avec au moins une valeur seuil ; et
> des moyens d'intervention sur le frein en fonction du résultat de la comparaison pour empêcher le basculement latéral ;
> **caractérisé par** la présence de moyens :

>> déterminant une grandeur de position oblique représentant la position oblique latérale de la structure du véhicule ;
>> la valeur seuil dépendant de la grandeur de position oblique ;
>> la grandeur de position oblique étant déterminée (302) à l'aide de la valeur de décalage d'un capteur d'accélération transversale (2) ;
>> la grandeur de position oblique dépendant au moins de si la structure du véhicule est adaptée à gauche ou à droite.

**Fig. 1**

**Fig. 2**

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9847733 A
- US 20060076741 A1

- DE 10356827 A1